# EUROPEAN PATENT SPECIFICATION

(11) **EP 1 965 172 B1**
(45) Date of publication and mention of the grant of the patent: **17.11.2010**
(21) Application number: 07004373.2
(22) Date of filing: 02.03.2007
(51) Int. Cl.: G01C 21/36

(54) **Information display system and method for displaying information associated with map related data**
Informationsanzeigesystem und Verfahren zum Anzeigen von Information im Zusammenhang mit kartenbezogenen Daten
Système d'affichage d'informations et procédé d'affichage d'informations associé à des données concernant une carte géographique.

(43) Date of publication of application: 03.09.2008
(73) Proprietor: Alpine Electronics, Inc., Tokyo (JP)
(72) Inventor: Wittig, Dirk, c/o Alpine Electronics R&D Europe, 70567 Stuttgart (DE); Sofariu, Stefan, c/o Alpine Electronics R&D Europe, 70567 Stuttgart (DE)
(74) Representative: Klunker, Hans-Friedrich

(56) References cited:
- EP-A- 1 217 857
- EP-A- 1 655 677
- EP-A2- 1 003 017
- US-A- 5 948 040
- US-A1- 2002 163 547
- US-A1- 2003 214 582
- US-A1- 2005 119 824
- US-A1- 2005 251 331
- US-B1- 6 321 158
- US-B1- 6 446 002
- MARMASSE N ET AL: "Location-Aware Information Delivery with ComMotion" LECTURE NOTES IN COMPUTER SCIENCE, SPRINGER VERLAG, BERLIN, DE, vol. 1927, 25 September 2000 (2000-09-25), pages 157-171, XP002369575 ISSN: 0302-9743

## Description

### Background of the Invention

### Field of the Invention

The present invention is directed to an information display system comprising a map data processing device for collecting and processing map related data to be displayed on a display screen and an input interface coupled with the map data processing device which is adapted for receiving user's instructions for selecting a geographic location. Further, the information display system comprises an information data processing device for receiving information from an external information provider, such as an internet or teletext provider. Moreover, the invention is directed to a navigation system comprising such an information display system. Further, the invention is directed to a method for displaying information associated with map related data. The system and method can be used particularly for a map display system such as a navigation system, including, for example, route guidance function, which is, for instance, installed in a vehicle.

### Description of the Related Art

A commonly known information display system for displaying map related data is used, for example, in a navigation system, such as a vehicle navigation system, having a display for displaying a map image. A commonly known navigation system detects the position of a vehicle generally by using a navigation sensor in the vehicle, a receiver such as a GPS (Global Positioning System) receiver, and map data corresponding to an area surrounding the detected position. For example, the map data can be read from a recording medium such as a CD-ROM or a DVD. Typically, a map data processing device installed in the navigation system collects required map data and processes map related data for being displayed on a display screen according to the current position of the vehicle. To this end, the navigation system uses an information display system such as a map display system for displaying a map image on the display screen and displaying a mark indicating a current position of the vehicle. The information display system may additionally or alternatively be adapted as a system for road-book visualization according to the processed map related data and the detected position.

In modern automotive systems, often there are also installed automotive infotainment applications such as a TV or an internet access terminal which may be used for accessing respective information providers such as digital broadcasting or internet providers. In a typical automotive infotainment application, the user has to switch between each of the applications for accessing the respective information, for example switching between the navigation application and TV or internet, when these applications use the same display system such as a common monitor next to the driver seat. This provides the disadvantage that only one of the applications may be accessed by the user at one time which may be rather inconvenient and which may cause additional driver's distraction when switching between the different applications during driving. On the other hand, providing different display systems for each of the different applications is less practicable as a matter of limited space in a vehicle and increased costs for providing different display systems.

An information received from an external information provider, such as an internet provider, may be used, e. g., to get local information associated with a particular location such as a city or a point of interest (POI) the vehicle approaches or travels through. For example, when approaching a city the driver of the vehicle may be interested in any information related to events taking place in the respective city or in weather information related to the city, for example.

In JP 2006-024196 A, there is disclosed an apparatus and methods for contents display which can dynamically update lists of contents retrieval results that are linked to position information to make them available to users. A set of metadata linked to position information is acquired from a server through a communication interface part or a broadcast interface part, and current position information is acquired in a current position information acquisition part. A contents processing part outputs a contents list which satisfies retrieval conditions including the current position information from the set of metadata.

In JP 2004-070558 A, there is disclosed a regional information output device adapted for displaying regional information as information related to the region where it is moved. The regional information output device displays regional information in visual connection with the particular point on a map and can display regional information in connection with the map and according to a destination information.

In US 2005/0251331 A1 there are disclosed methods, systems and applications for updating, enhancing, organizing and utilizing geographic maps, for locating points of interest and places of businesses, or POI's. Particularly, users may select the POI data sets that they are interested in downloading into the POI folder on their map. This includes identifying or defining a geographical area for each. POI data set of interest. Further, users can choose from downloading more complete sets of data, all restaurants for example, to downloading subsets of the data, for example only fast food chains. As each data set is selected, a geographic area of interest is also selected.

In US 6 446 002 B1 there is disclosed route controlled audio programming as a feature implemented on a navigation system in a vehicle whereby the user of the vehicle selects one or more types of audio programs and associates each type of audio program with the specific location along a predetermined route. When the vehicle reaches a location associated with one of the selected types of audio programming, the stored audio program of the selected type is presented to the user.

Typically, when accessing any information from an information provider, such as internet or teletext, the user is confronted with an increasing amount of in-formation, such as all regional or other information available for the respective location of interest. One example of a source providing large amounts of information is teletext, which typically provides a list with a large amount of entries which have to be studied by the user when selecting a particular information of interest. Moreover, the information is typically spread over several different pages and sub-pages, so that the user needs to call the individual page of interest every time the user wants to have a particular information therefrom. As a consequence, the handling of such information may cause increased driver's distraction even if the application filters and displays regional information in relation to a specific location on a map image.

### Summary of the Invention

It is therefore an object of the present invention to provide an information display system which allows the user to get an easy access to particular information related to a geographic location, such as a city or POI, without remarkably increasing distraction of the user, such as a driver of a vehicle in which the information display system is installed. Further, it is an object of the present invention to provide a corresponding method for displaying information associated with map related data.

The invention provides an information display system according to the features of claim 1. Moreover, the invention is directed to a navigation system comprising such information display system according to claim 15, which navigation system may be implemented within a vehicle, or any other mobile device. Further, the invention is directed to a method for displaying information associated with map related data, the method comprising the steps as specified in claim 16. Embodiments and advantageous features thereof are indicated in the dependent claims.

Particularly, the invention provides an information display system comprising a map data processing device for collection and processing map related data to be displayed on the display screen and an input interface coupled with the map data processing device and adapted for receiving user's instructions for selection a geographic location. The system further comprises an information data processing device for receiving information from an external information provider, wherein the information data processing device is coupled with the map data processing device for providing the received information thereto. The input interface is further arranged for receiving at least parts of the received information and is adapted for receiving user's instructions for selecting at least one part of the received information. The map data processing device is further adapted for linking the selected at least one part of the information with the selected location by receiving a corresponding user's instruction, thereby providing linked information associated with the selected location, and is further adapted for keeping the linked information ready for displaying on the display screen whenever the associated location is at least partially displayed on the display screen.

According to the invention, the information display system allows the user to get an easy access to particular information which is, for example, related to a geographic location such as a city or POI, or any other landmark. Particularly, the user may select at least one part of the information received from the external information provider, such as an internet or teletext provider, and may link the selected information with the particular location, such as the city or POI of interest. In the event that, for example, a vehicle approaches or travels through/by the respective city or POI, the linked information is kept ready for displaying on the display screen whenever this associated location is at least partially displayed on the display screen, so that, for instance, the driver of the vehicle may get easy access to the linked information during driving of the vehicle. Advantageously, the driver is not distracted by any large list of information from which the driver has to select the interesting information during driving. Further, the user may choose and select information the user is personally interested in and may have easy access to this personalized information whenever the associated location is displayed on the display screen, so that map information and personalized information may be displayed at one time on the display screen, so that the user may recognize both the location and the personalized information at a glance.

Therefore, according to the present invention, the information display system combines map related data and information from an external information provider, which is not directly related to the map data, in an intelligent way. Particularly, the user is provided with the possibility of an intelligent linking of information not directly related to the map data with locations determined and displayed by a navigation system. In this way, the user may be constantly provided with information the user is personally interested in, linked with map data of a navigation system.

In an embodiment of the present invention, the map data processing device is adapted for updating the linked information at least at intervals. For example, the updating process may be performed even if the linked information is not displayed on a display screen. This provides the advantage that the user is provided at any time with updated personalized information. For example, each time when approaching a particular city or POI, the user has easy access, e. g., to the current temperature of the location each time the user approaches or travels through the location.

According to another embodiment of the present invention, the map data processing device is adapted for providing to the input interface pre-selected information available with regard to the selected location, wherein the selected location is an input parameter for the pre-selection performed by the map data processing device. In this way, the user may be provided with pre-filtered information associated with the respective location, so that the user may select the information the user is personally interested in among this pre-selected information. For example, the map data processing device is adapted for providing a list with pre-selected information available with regard to the selected location. However, according to another embodiment, the map data processing device may also provide additionally or alternatively a list of any received information to the input interface, wherein the input interface is adapted for receiving user's instructions for selecting the at least one part of the information of interest from the list.

According to a further embodiment of the invention, the information display system may also comprise means for an automatic search process providing pre-selected information according to input parameters to the automatic search process. For example, an automatic search agent may check for available infotainment providers or sources for providing respective information automatically.

In order to improve an easy access to the particular information the user is interested in, the information display system may comprise, in an embodiment, means for providing an information button at the input interface, wherein upon actuating the information button, the map data processing device initiates the linking process of the at least one part of the received information with the selected location. Such information button interacts with the map data processing device so as to initiate the linking process upon actuating the information button. Particularly, upon actuating the information button, the map data processing device may generate at least one input menu for initiating the linking process.

According to an embodiment, the means for providing the information button is adapted to provide the information button on the display screen within a touch operating area. Accordingly, the display screen is designed as a touch screen and the means for providing the information button provide a touch operating area on the touch screen, wherein upon touching the operating area the information button is deemed to be pressed. According to another embodiment, the information button may be provided as a key or any other kind of switch, for example in the peripheral region of the display screen, such as a hardware push button or control stick.

For example, upon actuating the information button, the map data processing device may provide a list of the received information to the input interface from which the user may select the interesting part of the received information.

According to another embodiment of the invention, the information display system may also comprise means for providing an access button, basically in a way which may be similar to the information button, for easy access to the linked information. Upon actuating the access button, the map data processing device is adapted for displaying the linked information associated with the selected location. This provides the advantage that, in the event the user does not wish to have the information displayed on the display screen, the information is not displayed, whereas upon actuating the access button the linked information which is kept ready for displaying is actually displayed on the display screen upon user's request.

According to another embodiment of the invention, the map data processing device may be adapted for switching between different parts of linked information in a sequential manner each time the access button is actuated.

In a further embodiment of the invention, the information data processing device incorporates a broadcasting interface, such as a DVBT or DVBH tuner, and a device for accessing internet information, such as a modem for wireless communication, wherein the map data processing device is adapted to process and provide information received from both the broadcasting interface (e.g. the DVBT tuner) and the internet access device at one time for selection and display as linked information.

The information display system according to the invention may be used, for instance, in a map display system for displaying map data such as a navigation system. On the other hand, the invention may also be applied to navigation systems which are not capable of displaying the map data in a map image, but display the map related data for example as a road-book visualized to the user.

Further advantageous features and embodiments of the invention are evident from the dependent claims.

### Brief Description of the Drawings

The invention will now be explained in more detail by means of embodiments taking in conjunction with accompanying drawings, in which:
- Fig. 1: shows a schematic block diagram illustrating an embodiment of an vehicle navigation system, which is coupled with information data processing devices such as a DVBT tuner and/or a modem for wireless communication for providing information received from an external information provider, such as teletext or internet;
- Fig. 2: shows a map image of an exemplary embodiment of the invention providing an option for linking particular information with at least one geographic location such as a city;
- Fig. 3: illustrates an exemplary process for linking particular information with a geographic location by the user;
- Figs. 4 to 6: each illustrate further exemplary processes for linking particular information with a respective geographic location and for accessing the linked information by the user.

### Description of Embodiments

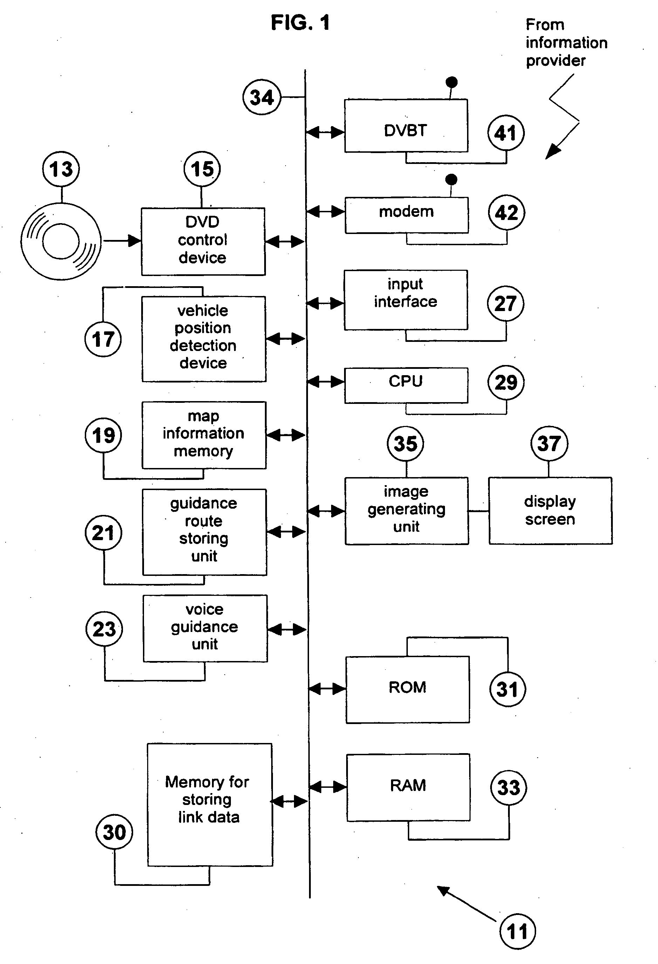

Fig. 1 is a schematic block diagram illustrating an implementation of an embodiment of a navigation system 11, which is for example implemented in a vehicle, or any other kind of mobile device such as a PDA (personal digital assistant) or mobile phone. The navigation system 11 includes a recording medium 13 such as a DVD, ROM or any other memory type suitable for storing map data. The recording medium 13 serves as a map storage medium for storing a digital map. A DVD control device 15 is for reading the predetermined map from the recording medium 13, and a vehicle position detection device 17 is for detecting a vehicle position. The vehicle position detection device 17 has a range sensor for generating a pulse every time the vehicle passes through a predetermined distance, an angle sensor for measuring the driving direction of the vehicle, and a receiving unit such as a global positioning system (GPS) receiving unit. Further, the navigation system 11 includes a map information memory 19 for storing digital map information read from the recording medium 13, a guidance route storing unit 21 for storing information related to the searched guidance or navigation route to the destination predetermined by the user. Optionally, a voice guidance unit 23 for voice guidance to a destination along the calculated route is included in the navigation system 11. An input interface 27 may be used for entering inputs such as a menu selection, map scrolling, search for a route to a destination or the like, which input interface 27 may include, for example, various keys and/or an adjusting knob for rotation movement by the user. Additionally or alternatively, the input interface 27 or parts thereof may be implemented in a display screen 37 designed as a touch screen, so that the user may input any commands into the navigation system 11 via touching the respective areas on the screen.

The navigation system 11 further includes a processor (CPU) 29 for controlling the overall operation of the navigation system in interaction with the stored programs and for providing input signals to respective ones of the components, dependent on the respective operation performed by the navigation system. A ROM 31 may be used for storing a guidance route search program or the like, a RAM 33 for storing processed results, and a display screen 37 for displaying a map image. An image generating unit 35 interacts with the processor 29 for generating a map image based on the map related data processed by the processor 29 for displaying on the display screen 37.

The navigation system 11 according to Fig. 1 further comprises a data bus 34 under the control of the CPU 29 for connecting all of the above mentioned components of the navigation system with each other. Via the data bus 34 the navigation system 11 is further coupled with information data processing devices 41, 42, which are not included in a typical navigation system. For example, the information data processing device 41 may comprise a broadcasting interface, such as a DVBT tuner, for receiving broadcasting information from an external broadcasting provider, such as a TV station, which also provides teletext information associated with one or multiple broadcasting channels. Such teletext information may be used to get information not related to map data and/or to get information which is not available from the map storage system, but from an external information provider, e. g., from a local broadcasting channel. Additionally or alternatively, the data bus 34 may be coupled with another information data processing device 42 for providing information from another information provider, wherein the information data processing device 42 may include, e. g., a wireless telecommunication interface such as a modem for wireless communication. For example, via modem 42, the user may access internet information from any internet provider available.

According to the present embodiment of Fig. 1, the CPU 29 and associated components controlled by or coupled with CPU 29, such as the image generating unit 35 or the DVD control device 15, act as a map data processing device for collecting and processing map related data to be displayed on the display screen 37. In this context, the map data processing device shall include all units and components necessary for performing the respective function necessary for collecting, processing and displaying of map related data on a display screen. Likewise, the input interface 27 shall be understood as to include all components necessary for receiving and processing user's instructions used for entering inputs via, for example, menu selection, map scrolling, key actuating, or the like. The information data processing devices shall be understood as comprising all components necessary for receiving and processing information from an external information provider, which is unrelated to the present information display system. The received information, such as information from teletext, internet, or any other information source, is not directly related to any map data or positioning data to be processed in the navigation system.

The input interface 27 is particularly capable of receiving user's instructions for selecting a geographic location displayed on the display screen 37, such as a city or point of interest (POI), etc. The input interface is also arranged for receiving at least parts of the received information from the external information provider provided through DVBT tuner 41 and/or modem 42, for example via CPU 29, so that at least parts of the received information from the external information provider are displayed to the user. To this end, the DVBT tuner 41 and Modem 42 are coupled with the map data processing device of the navigation system, particularly the CPU 29, for providing the received information thereto. The input interface 27 which is coupled with the map data processing device, particularly the CPU 29, may receive at least parts of the received information from the external provider and may provide, for example, an input menu for receiving user's instructions for selecting at least one part of the received information. The selected part of the received information, for example the current temperature of a particular city, may be selected as the information which is to be linked with the selected location, for example linking the temperature of the city Stuttgart to the selected location Stuttgart. To this end, the information display system according to Fig. 1 also comprises a memory 30 coupled with the data bus 34 for storing corresponding link data so that the system may determine for which location there was a setup of linked information associated with the respective location.

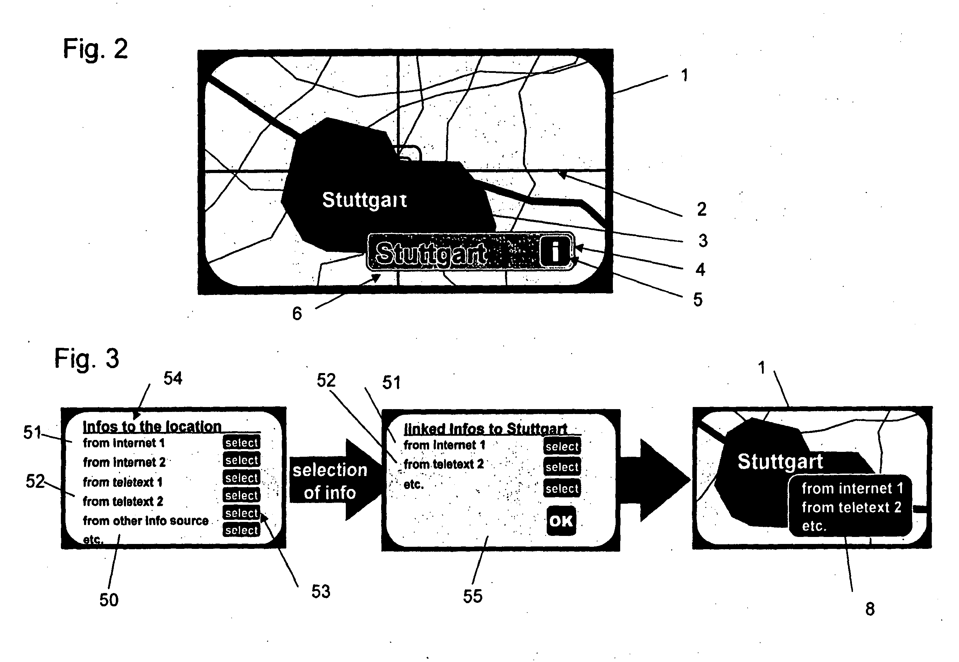

Fig. 2 shows a map image of an exemplary embodiment of the invention providing the option for the user to link particular information with at least one geographic location, such as a city, POI or any other landmark. Particularly, Fig. 2 shows a map image 1 displayed on the display screen 37 according to Fig. 1, wherein the map image 1 shows map information such as streets, cities and other map type information. In the present embodiment, the map image 1 shows the city of Stuttgart and a selected number of streets particularly of higher function classes such as regional streets and highways. By means of a cursor 2 and/or by using a scroll function, the user may bring the area of the city or any other location of interest into the focus of the cursor for selecting the respective location. For example, the map data processing device is adapted such that the location name or designation, which can be a city, a street, a POI, etc., automatically appears within the map image 1, such as in the present case of Fig. 2 the designation 6 showing the name of the city "Stuttgart". The designation of the location of interest is shown within a field 4 for display of the respective text. The city or any other location of interest is designated in Fig. 2 with reference number 3.

The information display system according to the invention may also comprise means, such as the CPU 29, in interaction with the input interface 27 and/or image generating unit 35, for providing an information button 5 as shown in Fig. 2. Generally, the display screen such as display screen 37 of Fig. 1 is designed as a touch screen and the means for providing the information button 5 provide a touch operating area on the touch screen, wherein upon touching the operating area the information button 5 is deemed to be pressed. Accordingly, in a similar manner, the display screen may be used for any type of input within a corresponding touch operating area, so that the user may select a geographic location on the map and/or any other provided information on the screen by touching the corresponding touch operating area. In this way, the input interface 27 may generate a respective information button 5 which may be touched or "pushed" by the user for selecting the specific function. In the present example, upon actuating or "pushing" the information button 5, the map data processing device of the system initiates the linking process of a selected part of the received information from the external information provider with a selected location 3, as explained in more detail below. As shown in Fig. 2, the information button 5 is arranged within the display field 4, showing in an exemplary manner to the user that the information button 5 is associated with the selected location 3, in the present example that the information button 5 is associated with the city "Stuttgart".

Fig. 3 illustrates an exemplary process for linking particular information received from an external information provider, such as internet or teletext information, with a geographic location selected by the user. As explained above, upon actuating the information button 5 according to Fig. 2, the system initiates the linking process. Particularly, upon actuating the information button 5, the system provides a list 50 of received information 54, whereas the information 54 designates the information or parts of the information received by information data processing devices 41 and/or 42. According to an embodiment, the list 50 may provide pre-selected information available with regard to the selected location 3, in the present example pre-selected information available with regard of Stuttgart. In other words, the system offers a pre-filtered choice of different information which somehow belongs to the selected location.

Upon touching or "pushing" a select button 53, the user may select at least one part of the information 54, in the present example one part 51 of a first information from internet 1 and at least one part 52 of a second information from teletext 2, wherein the information from internet 1 is provided by an internet provider received through modem 42, whereas the second information from teletext 2 is received through DVBT tuner 41 from any broadcasting provider. In this way, the system is adapted to provide information received from both the DVBT tuner and the modem at one time for selection among the different kinds of information, wherein different parts of the different kinds of information from the different information providers may be selected for linking with the selected location 3 in parallel. Accordingly, in the present example, the user would touch the select button 53 associated with information part 51 and the respective select button 53 associated with information part 52, respectively. The list 50 shown in Fig. 3 may be any kind of list, and there may be provided, in principle, any kind of input menu or multiple input menus in an hierarchical order for selecting the information of interest.

Pursuant to a selection of the location and information of interest, the system proceeds to link the selected parts of the received information with the selected location by receiving a corresponding user's instruction, in the present example links the selected parts 51 and 52 of information with the selected city of Stuttgart. This is illustrated in the example of Fig. 3 by providing a list 55 of linked information, by means of which the user may verify the selection. As shown with the list 55 according to Fig. 3, the selected part 51 of the first information from internet 1 is linked with the selected city of Stuttgart providing a first linked information 51 in list 55, whereas the part 52 of the second information is also linked with the city of Stuttgart, providing a second linked information 52 in the list 55 associated with this location. By pressing an associated select button, the user may verify the selection previously made, so that the selected information 51 and 52 is now linked to the location 3 as shown in Fig. 2. According to the invention, at least one of the first and second linked information, preferably both kinds of information in list 55, is kept ready for displaying on the display screen whenever the associated location 3, in the present example the city of Stuttgart, is at least partially displayed on the display screen. This is schematically shown in the right hand image of Fig. 3 showing description field 8 with the linked information 51 and 52 as previously selected associated with the selected location, wherein in this example the description field 8 may be displayed permanently whenever at least a part of the city of Stuttgart is displayed on the display screen. The description field 8 may move with any movement of the location 3 on the map image accordingly. Once the vehicle moves to another location so that the city of Stuttgart disappears from the map image 1, the description field 8 will also disappear or will show another different information linked to another location, etc.

Therefore, according to the invention, in a method for displaying information associated with map related data, the user selects a geographic location displayed on a display screen and selects at least one part of information at the input interface which is provided with received information from an external information provider, wherein the selected at least one part of the received information and the selected location are linked with each other by receiving corresponding user's instructions, so as to provide linked information associated with the selected location. This linked information is kept ready for displaying on the display screen whenever the associated location is at least partially displayed on the display screen. In this way, the user such as the driver of a vehicle is provided with an advantageous handling possibility to add semantic information to the location of interest, so that the user may create a "semantic link" to each part of information of interest provided by an external information provider which is not related to the navigation system, such as a supra-regional or regional information provider. Preferably, the user may also access multiple sources of information at one time such as shown in Fig. 3, so that the user may get any information of interest from different providers simultaneously in the map image.

The link data indicating the linkage relationship between the selected location and the selected parts of information may be stored in memory 30 according to Fig. 1. For example, as only one of multiple possibilities, a geographic location defined by a corresponding longitude and latitude may be linked with a pointer to an associated information in a corresponding table stored in memory 30. According to another example, a group of geographic locations such as a group of points defining a certain polygon such as the city area of Stuttgart (shown in Figs. 2 and 3 in the gray part of the map image) may be associated with corresponding pointer to information. Whenever at least one of the points of the polygon appears in the map image, the linked information is kept ready for displaying or is displayed on the map image. It will be appreciated by the skilled person that there may be various embodiments of implementing the invention particularly in a navigation system, wherein the skilled person will also appreciate that the principles described above with regard to a particular embodiment may also be applied to other kinds of locations, such as POls, streets, regions or addresses of particular locations, etc.

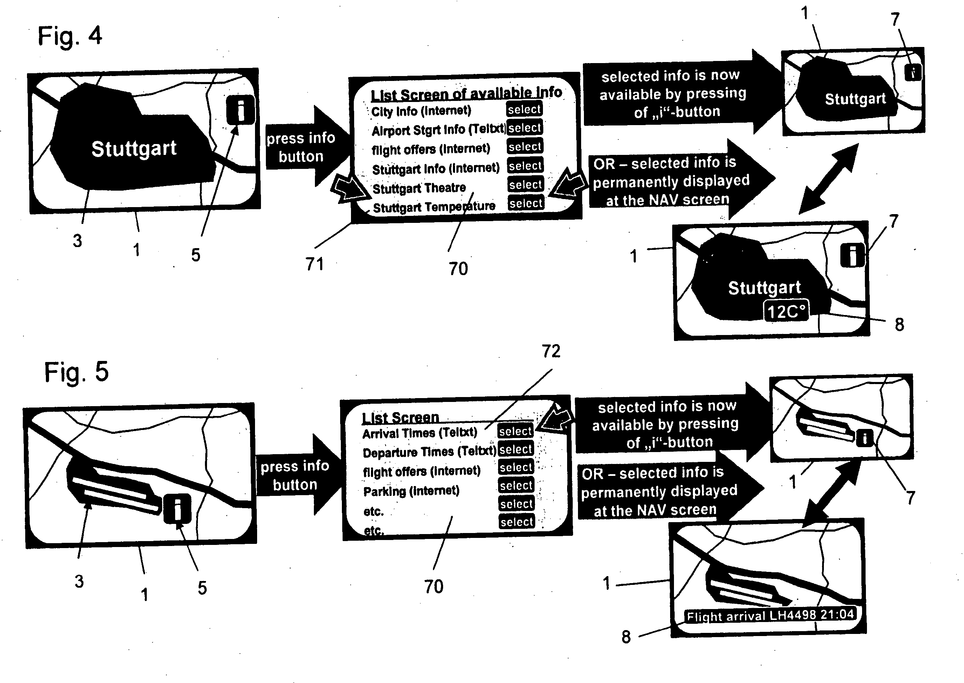

Figs. 4 to 6 each illustrate further exemplary processes for linking particular information of interest with a selected geographic location and for accessing the linked information by the user.

According to Fig. 4, an information button 5 is provided by the system on the display screen showing map image 1 with a location 3, in the present example again the city of Stuttgart. Upon pressing the information button 5, the system generates a list of received available information from any external information provider such as an internet or broadcasting provider, showing pre-selected information with respect to the city of Stuttgart. From the list 70 the user may select at least one part 71 of information, in the present example the temperature of Stuttgart, by pressing the associated select button on the touch screen, which pressing of the select button initiates the linking process for linking the selected information 71 with a previously selected location 3, i. e., the city of Stuttgart.

However, in the present example of Fig. 4, the linked information is not displayed on the display screen immediately, but is kept ready for displaying on the display screen. Particularly, the selected linked information is available by pressing an access button 7, wherein upon actuating or "pushing" the access button 7, the system is adapted for displaying the linked information associated with the selected location. In the present example, upon actuating the access button 7, the temperature of Stuttgart is displayed associated with the name "Stuttgart" on the display screen in description field 8 as shown in Fig. 4. According to another embodiment, as indicated in Fig. 4, the selected linked information may also be permanently displayed within the map image.

According to Fig. 5, a similar process is shown with regard to a POI, which is in the present case an airport of a particular city. In the present example, the selected airport is designated as location 3 within map image 1, wherein again an information button 5 is provided for initiating the linking process. Upon pressing the information button 5, the system provides a list 70 with pre-selected information from an external information provider showing, for example, teletext information as to arrival times, departure times, etc., with regard to the selected airport 3. Upon pressing the associated select button, the user may select an information part 72, i. e., in the present example the arrival times of the particular airport, as information to be linked with the associated airport to be displayed in the display screen. In a last step, upon pressing the access button 7, the arrival time for a particular flight of the associated airport is displayed in description field 8 associated with the selected airport as shown in Fig. 5.

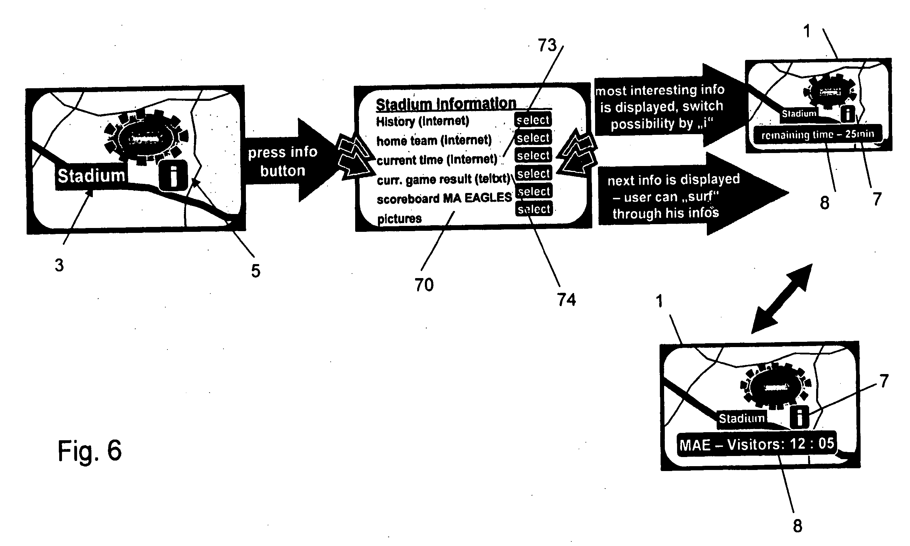

According to Fig. 6, another exemplary embodiment of a process for linking and accessing particular information with a selected location is shown. According to the embodiment of Fig. 6, the selected location 3 is a POI such as a football stadium designated as "Stadium". Upon pressing the information button 5, a list 70 is provided of received information from an external information provider providing pre-selected information with regard to the selected location. In the present example, the user may select parts 73 and 74 of the received information for linking with the associated POI 3. Upon actuating the access button 7, the system is adapted for switching between the different parts 73 and 74 of the linked information in a sequential manner each time the access button 7 is actuated. For example, in a first step the remaining time of a football match within the Stadium is shown in designation field 8, whereas upon pressing the access button 7 the system switches over to the displaying of the game result (selected information 74) displayed in description field 8.

Generally, the navigation system 11 may also be adapted for providing route guidance function, e. g. to a driver of a vehicle, as described above. In this context, the map data processing device may also be adapted for providing pre-selected information received from any of the information data processing devices 41, 42 available with regard to one or multiple locations on or adjacent to a selected route. In this way, when driving along a route, the system may provide particular information of interest as to the cities and/or POIs on or adjacent to the route, such as opening times of museums, match results of football games currently played in arenas, etc. According to another embodiment, however, also general information may be provided like stock exchange values in a description field or in the form of an information ticker. Such information ticker may basically look like the description field 8, but is controlled for permanently moving across the display screen, e.g. from left to right or vice versa, as known from TV applications. As a further embodiment, also political information such as current results of elections in a country or district may be displayed associated with a respective country or district displayed on the display map. In order to provide improved pre-selected information, the system may also employ an automatic search agent which is able to check various infotainment sources for the information of interest in order to provide pre-selected information automatically.

While the invention has been described with reference to exemplary embodiments, it is intended that the invention not be limited to the particular embodiments disclosed, but that the invention will include all embodiments falling within the scope of the appended claims.

## Claims

1. An information display system, comprising:
- a map data processing device (29, 35) for collecting and processing map related data to be displayed on a display screen (37),
- an input interface (27) coupled with the map data processing device (29, 35), the input interface adapted for receiving user's instructions for selecting a geographic location (3),
- an information data processing device (41, 42) for receiving information (54) from an external information provider, wherein the information data processing device is coupled with the map data processing device (29, 35) for providing the information received from the external information provider thereto,
- the input interface (27) coupled with the information data processing device (41, 42), the input interface arranged for receiving at least parts of the information (54) received from the external information provider and adapted for receiving user's instructions for selecting at least one part (51, 52) of the information (54) received from the external information provider,
**characterized in that**
- the map data processing device (29, 35) is adapted for linking the at least one part (51, 52) of the information selected at the input interface (27) with the selected location (3) by receiving a corresponding user's instruction at the input interface (27), thereby providing linked information (55) associated with the selected location (3),
- the map data processing device (29, 35) is adapted for keeping the linked information (55) ready for displaying on the display screen whenever the associated location (3) is at least partially displayed on the display screen,
- and comprising means (29, 35, 27) for providing an information button (5) at the input interface (27), wherein upon actuating the information button the map data processing device (29, 35) initiates the linking process of the at least one part (51, 52) of the information with the selected location (3).

2. The information display system according to claim 1, wherein
the map data processing device (29, 35) is adapted for updating the linked in-formation (55) at least at intervals.

3. The information display system according to claim 1 or 2, wherein
the map data processing device (29, 35) is adapted for updating the linked information (55) even if the linked information is not displayed on the display screen.

4. The information display system according to one of claims 1 to 3,
wherein the map data processing device (29, 35) is adapted for providing to the input interface (27) pre-selected information (70) available with regard to the selected location (3), wherein the selected location is an input parameter for the pre-selection performed by the map data processing device.

5. The information display system according to one of claims 1 to 4,
wherein the map data processing device (29, 35) is adapted for providing a list (50, 70) of the information (54) received from the external information provider to the input interface (27), wherein the input interface is adapted for receiving user's instructions for selecting the at least one part (51, 52, 71, 72, 73, 74) of the information from the list.

6. The information display system according to claim 5,
wherein the map data processing device (29, 35) is adapted for providing a list (70) with pre-selected information available with regard to the selected location (3).

7. The information display system according to one of claims 1 to 6, further comprising means (29) for an automatic search process providing pre-selected information (70).

8. The information display system according to one of claims 1 to 7,
wherein the map data processing device (29, 35) is adapted for displaying a designation (6) of the selected location (3) and for associating the information button (5) with the selected location (3).

9. The information display system according to one of claims 1 to 8,
wherein upon actuating the information button (5), the map data processing device (29, 35) is adapted for providing a list (50, 70) of the information (54) to the input interface (27) from which the at least one part (51, 52, 71, 72, 73, 74) of the information may be selected.

10. The information display system according to one of claims 1 to 9,
further comprising means (29, 35, 27) for providing an access button (7) at the input interface (27), wherein upon actuating the access button, the map data processing device is adapted for displaying the linked information (55) associated with the selected location (3).

11. The information display system according to claim 10,
wherein upon actuating the access button (7), the map data processing device (29, 35) is adapted for switching between different parts (73, 74) of linked information in a sequential manner each time the access button is actuated.

12. The information display system according to one of claims 1 to 11,
wherein the map data processing device (29, 35) is adapted for displaying the linked information on the display screen within a description field (8) associated with the selected location (3) on a map image or in the form of an information ticker.

13. The information display system according to one of claims 1 to 12,
wherein the information data processing device incorporates at least a broadcasting interface (41) for accessing broadcasting information and an internet access device (42) for accessing Internet information, wherein the map data processing device (29, 35) is adapted to process and provide information received from both the broadcasting interface and the internet access device at one time for selection and for displaying as linked information (55).

14. A navigation system comprising an information display system (11) according to any one of claims 1 to 13.

15. A method for displaying information associated with map related data, the method comprising the steps of:
- selecting a geographic location (3) displayed on a display screen (37),
- receiving information (54) from an external information provider and providing it to an input interface (27),
- selecting at least one part (51, 52) of the information (54) received from the external information provider at the input interface (27),
**characterized by**
- linking the selected at least one part (51, 52) of the information received from the external information provider with the selected location (3) by receiving a corresponding user's instruction, thereby providing linked information (55) associated with the selected location,
- keeping the linked information (55) ready for displaying on the display screen whenever the associated location (3) is at least partially displayed on the display screen,
- and providing an information button (5) at the input interface (27), wherein upon actuating the information button initiating the linking process of the at least one part (51, 52) of the information with the selected location (3).

16. The method according to claim 15, further comprising
- receiving and providing a first information from a first information provider (internet 1) and a second information from a second information provider (teletext 2),
- selecting at least one part (51) of the first information and selecting at least one part (52) of the second information,
- linking the selected at least one part (51) of the first information with the selected location (3) providing first linked information (55, 51) associated with the location, and linking the selected at least one part (52) of the second information with the selected location (3) providing second linked information (55, 52) associated with the location,
- keeping at least one of the first and second linked information (55, 51, 52) ready for displaying on the display screen whenever the associated location (3) is at least partially displayed on the display screen.

## Patentansprüche

1. Informationsanzeigesystem, aufweisend:
- eine Kartendaten-Verarbeitungsvorrichtung (29, 35) zum Sammeln und Verarbeiten von Karten-bezogenen Daten, die auf einem Anzeigeschirm (37) anzuzeigen sind,
- eine mit der Kartendaten-Verarbeitungsvorrichtung (29, 35) gekoppelte Eingabeschnittstelle (27), die dazu ausgebildet ist, Anweisungen eines Benutzers zum Auswählen eines geografischen Ortes (3) zu empfangen,
- eine Informationsdaten-Verarbeitungsvorrichtung (41, 42) zum Empfangen von Information (54) von einem externen Informationsanbieter, wobei die Informationsdaten-Verarbeitungsvorrichtung mit der Kartendaten-Verarbeitungsvorrichtung (29, 35) gekoppelt ist, um dieser die von dem externen Informationsanbieter empfangene Information bereitzustellen,
- wobei die Eingabeschnittstelle (27) mit der Informationsdaten-Verarbeitungsvorrichtung (41, 42) gekoppelt ist und die Eingabeschnittstelle dazu ausgebildet ist, zumindest Teile der von dem externen Informationsanbieter empfangenen Information zu empfangen, sowie dazu ausgebildet ist, Anweisungen des Benutzers zum Auswählen von mindestens einem Teil (51, 52) der von dem externen Informationsanbieter empfangenen Information (54) auszuwählen,
**dadurch gekennzeichnet,**
- **dass** die Kartendaten-Verarbeitungsvorrichtung (29, 35) dazu ausgebildet ist, den an der Eingabeschnittstelle (27) ausgewählten, mindestens einen Teil (51, 52) der Information mit dem ausgewählten Ort (3) durch Empfangen einer entsprechenden Anweisung von dem Benutzer an der Eingabeschnittstelle (27) zu verknüpfen, um **dadurch** dem ausgewählten Ort (3) zugeordnete, verknüpfte Information (55) zu schaffen,
- **dass** die Kartendaten-Verarbeitungsvorrichtung (29, 35) dazu ausgebildet ist, die verknüpfte Information (55) für die Anzeige auf dem Anzeigeschirm bereit zu halten, wann immer der zugeordnete Ort (3) zumindest teilweise auf dem Anzeigeschirm angezeigt wird,
- und **dass** eine Einrichtung (29, 35, 27) zum Bereitstellen einer Informations-Schaltfläche (5) an der Eingabeschnittstelle (27) vorhanden ist, wobei bei Betätigung der Informations-Schaltfläche die Kartendaten-Verarbeitungsvorrichtung (29, 35) den Verknüpfungsvorgang des mindestens einen Teils (51, 52) der Information mit dem ausgewählten Ort (3) initiiert.

2. Informationsanzeigesystem nach Anspruch 1,
wobei die Kartendaten-Verarbeitungsvorrichtung (29, 35) dazu ausgebildet ist, die verknüpfte Information (55) zumindest in Intervallen zu aktualisieren.

3. Informationsanzeigesystem nach Anspruch 1 oder 2,
wobei die Kartendaten-Verarbeitungsvorrichtung (29, 35) dazu ausgebildet ist, die verknüpfte Information (55) auch dann zu aktualisieren, wenn die verknüpfe Information nicht auf dem Anzeigeschirm angezeigt wird.

4. Informationsanzeigesystem nach einem der Ansprüche 1 bis 3,
wobei die Kartendaten-Verarbeitungsvorrichtung (29, 35) dazu ausgebildet ist, an der Eingabeschnittstelle (27) vorausgewählte Information (70) bereitzustellen, die bezüglich des ausgewählten Ortes (3) verfügbar ist, und wobei es sich bei dem ausgewählten Ort um einen Eingabeparameter für die von der Kartendaten-Verarbeitungsvorrichtung ausgeführte Vorauswahl handelt.

5. Informationsanzeigesystem nach einem der Ansprüche 1 bis 4,
wobei die Kartendaten-Verarbeitungsvorrichtung (29, 35) dazu ausgebildet ist, eine Liste (50, 70) der von dem externen Informationsanbieter empfangenen Information (54) an der Eingabeschnittstelle (27) bereitzustellen, wobei die Eingabeschnittstelle dazu ausgebildet ist, Anweisungen des Benutzers zum Auswählen des mindestens einen Teils (51, 52, 71, 72, 73, 74) der Information von der Liste zu empfangen.

6. Informationsanzeigesystem nach Anspruch 5,
wobei die Kartendaten-Verarbeitungsvorrichtung (29, 35) dazu ausgebildet ist, eine Liste (70) mit vorausgewählter Information bereitzustellen, die in Bezug auf den ausgewählten Ort (3) verfügbar ist.

7. Informationsanzeigesystem nach einem der Ansprüche 1 bis 6,
weiterhin aufweisend eine Einrichtung (29) für einen automatischen Suchvorgang zum Bereitstellen von vorausgewählter Information (70).

8. Informationsanzeigesystem nach einem der Ansprüche 1 bis 7,
wobei die Kartendaten-Verarbeitungsvorrichtung (29, 35) dazu ausgebildet ist, eine Bezeichnung (6) des ausgewählten Orts (3) anzuzeigen und die Informations-Schaltfläche (5) dem ausgewählten Ort (3) zuzuordnen.

9. Informationsanzeigesystem nach einem der Ansprüche 1 bis 8,
wobei bei Betätigung der Informations-Schaltfläche (5) die Kartendaten-Verarbeitungsvorrichtung (29, 35) dazu ausgebildet ist, eine Liste (50, 70) der Information (54) an der Eingabeschnittstelle (27) bereitzustellen, aus der der zumindest eine Teil (51, 52, 71, 72, 73, 74) der Information ausgewählt werden kann.

10. Informationsanzeigesystem nach einem der Ansprüche 1 bis 9,
weiterhin aufweisend eine Einrichtung (29, 35, 27) zum Bereitstellen einer Zugriffs-Schaltfläche (7) an der Eingabeschnittstelle (27), wobei bei Betätigung der Zugriffs-Schaltfläche die Kartendaten-Verarbeitungsvorrichtung dazu ausgebildet ist, die mit dem ausgewählten Ort (3) verknüpfte Information (55) anzuzeigen.

11. Informationsanzeigesystem nach Anspruch 10,
wobei bei Betätigung der Zugriffs-Schaltfläche (7) die Kartendaten-Verarbeitungsvorrichtung (29, 35) dazu ausgebildet ist, zwischen verschiedenen Teilen (73, 74) von verknüpfter Information bei jeder Betätigung der Zugriffs-Schaltfläche nacheinander umzuschalten.

12. Informationsanzeigesystem nach einem der Ansprüche 1 bis 11, wobei die Kartendaten-Verarbeitungsvorrichtung (29, 35) dazu ausgebildet ist, die verknüpfte Information auf dem Anzeigeschirm innerhalb eines dem ausgewählten Ort (3) zugeordneten Beschreibungsfeldes (8) auf einem Kartenbild oder in Form von laufender Information anzuzeigen.

13. Informationsanzeigesystem nach einem der Ansprüche 1 bis 12,
wobei die Informationsdaten-Verarbeitungsvorrichtung mindestens eine Rundfunk-Schnittstelle (41) zum Zugreifen auf Rundfunkinformation und eine Internet-Zugangsvorrichtung (42) zum Zugreifen auf Internetinformation aufweist, wobei die Kartendaten-Verarbeitungsvorrichtung (29, 35) dazu ausgebildet ist, sowohl von der Rundfunk-Schnittstelle als auch von der Internet-Zugangsvorrichtung empfangene Information jeweils für die Auswahl und für die Anzeige als verknüpfte Information (55) zu verarbeiten und bereitzustellen.

14. Navigationssystem mit einem Informationsanzeigesystem (11) nach einem der Ansprüche 1 bis 13.

15. Verfahren zum Anzeigen von Information, die Karten-bezogenen Daten zugeordnet wird, wobei das Verfahren folgende Schritte aufweist:
- Auswählen eines geografischen Ortes (3), der auf einem Anzeigeschirm (37) angezeigt wird,
- Empfangen von Information (54) von einem externen Informationsanbieter und Bereitstellen von dieser an einer Eingabeschnittstelle (27),
- Auswählen von mindestens einem Teil (51, 52) der von dem externen Informationsanbieter empfangenen Information (54) an der Eingabeschnittstelle (27),
**gekennzeichnet durch**
- Verknüpfen des ausgewählten, mindestens einen Teils (51, 52) der von dem externen Informationsanbieter empfangenen Information mit dem ausgewählten Ort (3) **durch** Empfangen einer entsprechenden Anweisung eines Benutzers, um **dadurch** verknüpfte Information (55) zu schaffen, die dem ausgewählten Ort zugeordnet ist,
- Bereithalten der verknüpften Information (55) für die Anzeige auf dem Anzeigeschirm, wann immer der zugeordnete Ort (3) zumindest teilweise auf dem Anzeigeschirm angezeigt wird,
- und Bereitstellen einer Informations-Schaltfläche (5) an der Eingabeschnittstelle (27), wobei bei Betätigung der Informations-Schaltfläche der Verknüpfungsvorgang des mindestens einen Teils (51, 52) der Information mit dem ausgewählten Ort (3) initiiert wird.

16. Verfahren nach Anspruch 15,
das weiterhin folgende Schritte aufweist:
- Empfangen und Bereitstellen von erster Information von einem ersten Informationsanbieter (Internet 1) und von zweiter Information von einem zweiten Informationsanbieter (Teletext 2),
- Auswählen von mindestens einem Teil (51) der ersten Information und Auswählen von mindestens einem Teil (52) der zweiten Information,
- Verknüpfen des ausgewählten, mindestens einen Teils (51) der ersten Information mit dem ausgewählten Ort (3) unter Bereitstellung von erster verknüpfter Information (55, 51), die dem Ort zugeordnet ist, und Verknüpfen des ausgewählten mindestens einen Teils (52) der zweiten Information mit dem ausgewählten Ort (3) unter Bereitstellung von zweiter verknüpfter Information (55, 52), die dem Ort zugeordnet ist,
- Bereithalten von mindestens einer von der ersten und der zweiten verknüpften Information (55, 51, 52) für die Anzeige auf dem Anzeigeschirm, wann immer der zugeordnete Ort (3) zumindest teilweise auf dem Anzeigeschirm angezeigt wird.

## Revendications

1. Système d'affichage d'informations, comprenant:
un dispositif de traitement de données de carte (29, 35) pour collecter et traiter des données cartographiques devant être affichées sur un écran d'affichage (37),
une interface d'entrée (27) couplée au dispositif de traitement de données de carte (29, 35), l'interface d'entrée étant conçue pour recevoir des instructions de l'utilisateur pour sélectionner un lieu géographique (3),
un dispositif de traitement de données d'informations (41, 42) pour recevoir des informations (54) en provenance d'un fournisseur d'informations externe, le dispositif de traitement de données d'informations étant couplé au dispositif de traitement de données de carte (29, 35) pour lui fournir les informations reçues du fournisseur d'informations externe,
l'interface d'entrée (27) étant couplée au dispositif de traitement de données d'informations (41, 42), l'interface d'entrée étant conçue pour recevoir au moins des parties des informations (54) reçues du fournisseur d'informations externe et étant conçue pour recevoir des instructions de l'utilisateur pour sélectionner au moins une partie (51, 52) des informations (54) reçues du fournisseur d'informations externe,
**caractérisé en ce que**:
le dispositif de traitement de données de carte (29, 35) est conçu pour lier l'au moins une partie (51, 52) des informations sélectionnée au niveau de l'interface d'entrée (27) au lieu sélectionné (3) par réception d'une instruction correspondante de l'utilisateur au niveau de l'interface d'entrée (27), pour ainsi produire des informations liées (55) associées au lieu sélectionné (3),
le dispositif de traitement de données de carte (29, 35) est conçu pour maintenir les informations liées (55) prêtes à être affichées sur l'écran d'affichage chaque fois que le lieu associé (3) est au moins partiellement affiché sur l'écran d'affichage,
et comprenant des moyens (29, 35, 27) pour produire un bouton d'informations (5) au niveau de l'interface d'entrée (27), dans lequel en cas d'actionnement du bouton d'informations, le dispositif de traitement de données de carte (29, 35) lance le processus de liaison de l'au moins une partie (51, 52) des informations au lieu sélectionné (3).

2. Système d'affichage d'informations selon la revendication 1, dans lequel le dispositif de traitement de données de carte (29, 35) est conçu pour mettre à jour les informations liées (55) au moins par intervalles.

3. Système d'affichage d'informations selon la revendication 1 ou 2, dans lequel le dispositif de traitement de données de carte (29, 35) est conçu pour mettre à jour les informations liées (55) même si les informations liées ne sont pas affichées sur l'écran d'affichage.

4. Système d'affichage d'informations selon l'une des revendications 1 à 3, dans lequel le dispositif de traitement de données de carte (29, 35) est conçu pour fournir à l'interface d'entrée (27) des informations présélectionnées (70) disponibles concernant le lieu sélectionné (3), le lieu sélectionné étant un paramètre d'entrée pour la présélection effectuée par le dispositif de traitement de données de carte.

5. Système d'affichage d'informations selon l'une des revendications 1 à 4, dans lequel le dispositif de traitement de données de carte (29, 35) est conçu pour fournir une liste (50, 70) des informations (54) reçues du fournisseur d'informations externe à l'interface d'entrée (27), l'interface d'entrée étant conçue pour recevoir des instructions de l'utilisateur pour sélectionner l'au moins une partie (51, 52, 71, 72, 73, 74) des informations à partir de la liste.

6. Système d'affichage d'informations selon la revendication 5, dans lequel le dispositif de traitement de données de carte (29, 35) est conçu pour fournir une liste (70) avec des informations présélectionnées disponibles concernant le lieu sélectionné (3).

7. Système d'affichage d'informations selon l'une des revendications 1 à 6, comprenant en outre un moyen (29) pour exécuter un processus de recherche automatique fournissant des informations présélectionnées (70).

8. Système d'affichage d'informations selon l'une des revendications 1 à 7, dans lequel le dispositif de traitement de données de carte (29, 35) est conçu pour afficher une dénomination (6) du lieu sélectionné (3) et pour associer le bouton d'informations (5) au lieu sélectionné (3).

9. Système d'affichage d'informations selon l'une des revendications 1 à 8, dans lequel en cas d'actionnement du bouton d'informations (5), le dispositif de traitement de données de carte (29, 35) est conçu pour fournir une liste (50, 70) des informations (54) à l'interface d'entrée (27) à partir de laquelle l'au moins une partie (51, 52, 71, 72, 73, 74) des informations peut être sélectionnée.

10. Système d'affichage d'informations selon l'une des revendications 1 à 9, comprenant en outre des moyens (29, 35, 27) pour produire un bouton d'accès (7) au niveau de l'interface d'entrée (27), dans lequel en cas d'actionnement du bouton d'accès, le dispositif de traitement de données de carte est conçu pour afficher les informations liées (55) associées au lieu sélectionné (3).

11. Système d'affichage d'informations selon la revendication 10, dans lequel en cas d'actionnement du bouton d'accès (7), le dispositif de traitement de données de carte (29, 35) est conçu pour commuter entre différentes parties (73, 74) des informations liées d'une façon séquentielle chaque fois que le bouton d'accès est actionné.

12. Système d'affichage d'informations selon l'une des revendications 1 à 11, dans lequel le dispositif de traitement de données de carte (29, 35) est conçu pour afficher les informations liées sur l'écran d'affichage à l'intérieur d'un champ de description (8) associé au lieu sélectionné (3) sur une image de carte ou sous la forme d'un message d'informations défilant.

13. Système d'affichage d'informations selon l'une des revendications 1 à 12, dans lequel le dispositif de traitement de données d'informations incorpore au moins une interface de radiodiffusion (41) pour accéder à des informations de radiodiffusion et un dispositif d'accès Internet (42) pour accéder à des informations Internet, le dispositif de traitement de données de carte (29, 35) étant conçu pour traiter et fournir des informations reçues en provenance aussi bien de l'interface de radiodiffusion que du dispositif d'accès Internet en même temps pour une sélection et pour un affichage en tant qu'informations liées (55).

14. Système de navigation comprenant un système d'affichage d'informations (11) selon l'une quelconque des revendications 1 à 13.

15. Procédé d'affichage d'informations associées à des données cartographiques, le procédé comprenant les étapes de:
sélection d'un lieu géographique (3) affiché sur un écran d'affichage (37),
réception d'informations (54) en provenance d'un fournisseur d'informations externe et fourniture de celles-ci à une interface d'entrée (27),
sélection d'au moins une partie (51, 52) des informations (54) reçues du fournisseur d'informations externe au niveau de l'interface d'entrée (27),
**caractérisé par**:
la liaison de l'au moins une partie sélectionnée (51, 52) des informations reçues du fournisseur d'informations externe au lieu sélectionné (3) par réception d'une instruction correspondante de l'utilisateur, pour ainsi produire des informations liées (55) associées au lieu sélectionné,
le maintien des informations liées (55) prêtes à être affichées sur l'écran d'affichage chaque fois que le lieu associé (3) est au moins partiellement affiché sur l'écran d'affichage,
et la production d'un bouton d'informations (5) au niveau de l'interface d'entrée (27), dans lequel l'actionnement du bouton d'informations lance le processus de liaison de l'au moins une partie (51, 52) des informations au lieu sélectionné (3).

16. Procédé selon la revendication 15, comprenant en outre:
la réception et la fourniture de premières informations provenant d'un premier fournisseur d'informations (Internet 1) et de secondes informations provenant d'un second fournisseur d'informations (télétexte 2),
la sélection d'au moins une partie (51) des premières informations et la sélection d'au moins une partie (52) des secondes informations,
la liaison de l'au moins une partie sélectionnée (51) des premières informations au lieu sélectionné (3), produisant des premières informations liées (55, 51) associées au lieu, et la liaison de l'au moins une partie sélectionnée (52) des secondes informations au lieu sélectionné (3), produisant des secondes informations liées (55, 52) associées au lieu,
le maintien d'au moins une des premières et secondes informations liées (55, 51, 52) prêtes à être affichées sur l'écran d'affichage chaque fois que le lieu associé (3) est au moins partiellement affiché sur l'écran d'affichage.
